# EUROPEAN PATENT APPLICATION

(11) **EP 2 568 479 A1**
(43) Date of publication of application: **13.03.2013**
(21) Application number: 12183521.9
(22) Date of filing: 07.09.2012
(51) Int. Cl.: H01B 17/00, H02G 7/00, H02B 7/06, H01F 27/06

(54) **Protective hood for a transformer bushing**

(30) Priority: 07.09.2011 NL 2007369
(71) Applicant: Alfen B.V., 1332 AP Almere (NL)
(72) Inventor: Hoetmer, Ferry René, 1273 CE Huizen (NL)
(74) Representative: Grootscholten, Johannes A.M.

(57) **Abstract**

A protective hood for protecting an electrical coupling (7) between two conductors (4, 5) which substantially enclose a sharp angle and extend at this angle to the coupling (7) and wherein at least one of the conductors (4,11) extends at the enclosed angle beyond the coupling (7), comprising:
a mounting plate (14) accommodating at least the conductor (4,11) protruding beyond the coupling (7); and
a skirt-like configuration (13) covering at least the coupling (7) and a part of the length of the conductors (4, 5) up to the coupling (7), wherein the mounting plate (14) and the skirt-like configuration (13) form an integrated unit which accommodates the conductor (4,11) protruding beyond the coupling (7) at a location on conductor (4) along the length thereof opposite the enclosed angle relative to the coupling (7).

## Description

The present invention relates to a protective hood for protecting an electrical coupling between two conductors, comprising a mounting plate and a skirt-like configuration.

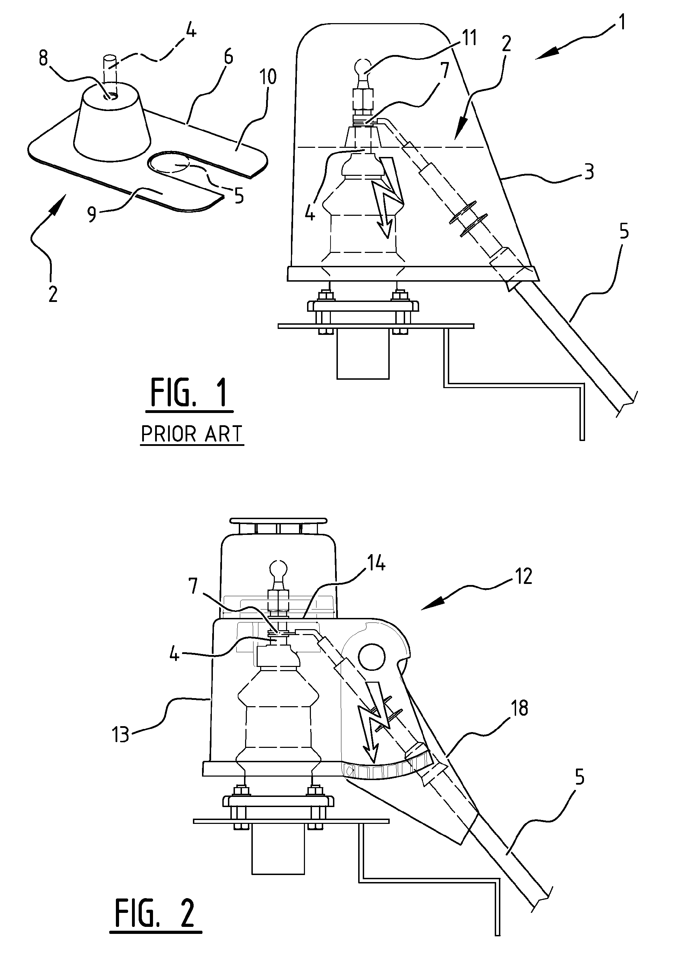

Such protective hoods are generally known; a type applied for many years is shown in figure 1.

The known protective hood 1 is applied for instance in transformer stations to protect a coupling 7 or connection between a copper core 4 protruding from the transformer station and an electrical conductor 5. Copper core 4 and conductor 5 are both conductors in the sense of the present art. The known protective hood comprises a mounting plate 2 and a skirt-like configuration 3. Mounting plate 2 comprises a substantially U-shaped base plate 6 with a hole 8 in the body of the U-shaped base plate for placing the copper core 4 therethrough during assembly, while conductor 5 extends between legs 9, 10 of the U-shaped base plate 6 to coupling 7. Once mounting plate 2 with hole 8 has been arranged over copper core 4, the coupling 7 between copper core 4 and conductor 5 is realized and an earthing ball 11 can be placed on the free end of copper core 4. Finally, the skirt-like configuration 3 is placed loosely over the assembly of copper core 4, conductor 5 and mounting plate 2. The skirt-like configuration is a stiff or hard, form-retaining and opaque element in one piece, and not only protects said assembly but also conceals this assembly from view. In the case of maintenance or even a suspected malfunction the whole skirt-like configuration has to be removed, for which purpose an engineer has to keep his distance for the case that a voltage, of for instance 10 kV, remains on copper core 4, and so also on conductor 5. For this purpose engineers often use a stick or the like to take the skirt-like configuration 3 off mounting plate 2 at a distance that is deemed safe, this by flicking or knocking off configuration 3, which - as will be apparent - usually takes place in uncontrolled and unmanageable manner. This sometimes involves a great deal of force, and skirt-like configuration 3 can be damaged if it falls to the ground. Skirt-like configuration 3 may also strike unintentionally against copper core 4 or conductor 5 here and, in all probability, also against mounting plate 2, whereby the integrity of coupling 7 may be compromised. This all takes place while there is no certainty as to whether the voltage has (already) drained away or whether coupling 7 is still live.

The present invention has for its object to obviate or at least (considerably) reduce the above stated or other drawbacks, disadvantages and problems of the known protective hoods, for which purpose a protective hood according to the invention is distinguished by the combination of measures according to the appended independent claim.

A highly unexpected and inventive measure is thus taken according to the invention, i.e. a combination of the skirt-like configuration with integrated mounting plate, this being found to form the basis for solutions to problems associated with known protective hoods, while the skilled person would in all probability be much more likely to opt for a division of the skirt-like configuration or similar measure in order to mitigate the consequences of removing the skirt-like configuration. The invention however breaks wholly new ground while there was no obvious reason to do so, and nevertheless provides a highly effective solution to several problems at the same time. In an embodiment with the conductors in an upward orientation toward the coupling the mounting plate will extend above the coupling. Other orientations are also possible. In each configuration according to the invention the coupling therefore also lies under or behind the mounting plate, on the same side as the angle enclosed by the conductors, this partially explaining the improvement in terms of convenience of assembly, since in earlier protective hoods the coupling was on the contrary located above the mounting plate opposite the enclosed angle, this involving possible risks during removal of the skirt-like configuration.

Within the context of the present invention many additional, and sometimes even preferred embodiments are possible which will become apparent on the basis of the following description and several of which are defined in the dependent claims.

The protective hood according to the invention thus has an embodiment with a cap which can be placed on the mounting plate. Only the cap then need be removed to provide access to at least one of an earthing ball, the coupling, the copper core, the conductor or other component or element. In such an embodiment with a cap the embodiment can further be such that there is arranged on the mounting plate a cylindrical ring, on and around which the cap fits closely. The cap can thus be easily placed and - what is usually more important - removed. The cap can comprise a gripping point here for controlled removal from at least the mounting plate. Such a gripping point can take the form of a flange or, alternatively, an eye or ring or loop arranged on the cap.

In an embodiment with a cap the protective hood can further have the feature that in placed position the cap encloses in conjunction with the mounting plate a free end, protruding through the mounting plate, of the conductor extending beyond the coupling. Access can be provided to the relevant conductor by taking off the cap and without the whole skirt-like configuration having to be removed.

Additionally or alternatively, the protective hood according to the invention has the feature in an embodiment thereof that at least a part of the skirt-like configuration is manufactured from transparent material.

Additionally or alternatively, the protective hood according to the invention has the feature in an embodiment thereof with a cap that at least part of the cap is manufactured from transparent material.

Transparent materials can allow visual inspection of the situation in and under the skirt-like configuration and the mounting plate where this was not possible in the case of the known protective hood, this without having to remove even the skirt-like configuration or cap.

Additionally or alternatively, the protective hood according to the invention has the feature in an embodiment thereof that the skirt-like configuration comprises on at least one side a nose-like protrusion with a shape substantially corresponding to the angle between the conductors. This can serve to lead a second of the conductors, at an angle to a first of the conductors, to the coupling. In such an embodiment the protective hood can further have the feature that the nose-like protrusion is arranged tiltably on the skirt-like configuration for the purpose of adjusting the position of the nose-like protrusion in accordance with the angle between the conductors. The position of the nose-like protrusion can thus be adjusted to an angle between the first and second conductors. It can be a further advantage here for the nose-like protrusion and the skirt-like configuration to be connected by means of at least one hinge construction or tilting construction. This enables easy adjustment of the position of the protrusion relative to the skirt-like configuration. In addition, the protective hood can then further have the feature that at least one releasable locking is arranged between the nose-like protrusion and the skirt-like configuration for positional adjustment of the nose-like protrusion relative to the skirt-like configuration. The nose-like protrusion can thus be secured more or less temporarily in a desired position in accordance with the angle between the first and second conductors.

Following the above specification of the present invention and diverse facets and aspects thereof, a single preferred embodiment thereof will be described with reference to the accompanying drawing, in which the single embodiment of a protective hood is thus shown in non-limitative manner and only by way of example and embodied in accordance with the present invention, and wherein the same or similar aspects, components, elements and functions are designated in the various figures with the same reference numerals. In the drawing:
Fig. 1 shows a partially cut-away side view and a perspective view of a known configuration;
Fig. 2 shows a partially cut-away side view of a protective hood according to the present invention;
Fig. 3 shows a larger view than Fig. 2 with a nose-like protrusion in a position other than that in Fig. 2;
Fig. 4 shows a perspective view of the protective hood according to Fig. 2 and Fig. 3; and
Fig. 5 shows a perspective view corresponding to Fig. 4 of the protective hood in disassembled state.
Fig. 1 shows a known configuration as already described in the foregoing.

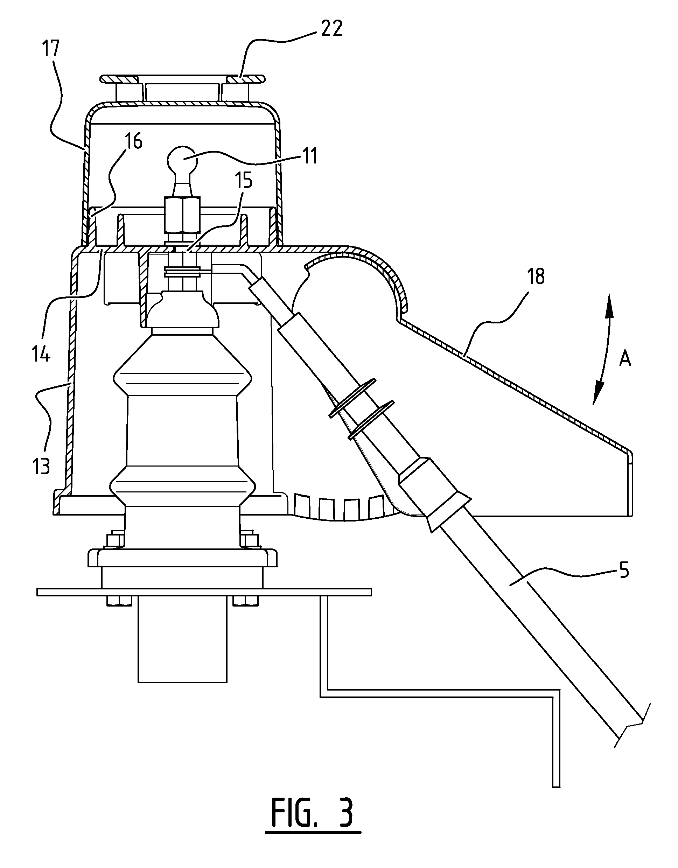

Fig. 2 shows an embodiment of a protective hood 12, of which the skirt-like configuration 13 and mounting plate 14 form an integrated unit. Mounting plate 14 is situated above coupling 7 and copper core 4 is all that protrudes through an opening 15 to a position above mounting plate 14, as also shown in Fig. 3. An earthing ball 11 is arranged on copper core 4.

Arranged on the upper side of mounting plate 14 is an annular element 16 over which and around which a cap 17 which is turned upside down can be placed in order to protect copper core 4 with earthing ball 11, or from which it can be removed. Earthing ball 11 is arranged on the free outer end of copper core 4 protruding through opening 15 and above mounting plate 14. Cap 17 can be removed in simple, easy, managed and controlled manner. This is particularly the case when cap 17 has a downward diverging form during use and fits closely round ring 16 which is formed, integrated or arranged on top of mounting plate 14.

Skirt-like configuration 13 and inverted cap 17 are manufactured from transparent material in order to enable visual inspection of the situation inside, even without cap 17 or skirt-like configuration 13 needing to be removed.

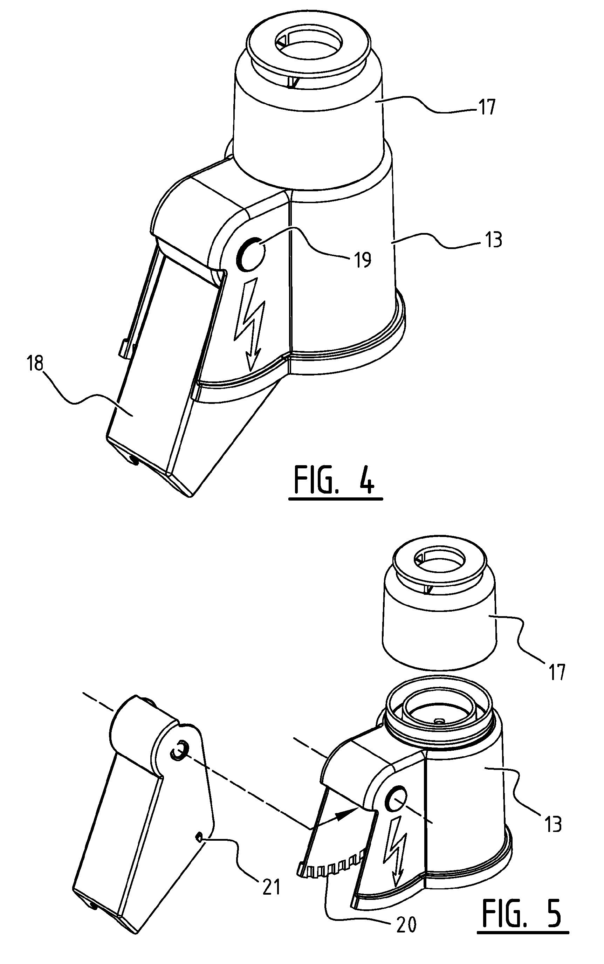

In Fig. 3 a nose-like protrusion 18 is arranged on the right-hand side of skirt-like configuration 13. Nose-like protrusion 18 can pivot and/or tilt in the direction of double arrow A so as to occupy a position preferably lying closely against conductor 5, such as the position of nose-like protrusion 18 as shown in Fig. 2. Nose-like protrusion 18 is connected by means of two hinges 19 to skirt-like configuration 13, these hinges comprising little more than a pin-hole connection, whereby nose-like protrusion 18 can rotate or tilt on hinges 19. In order to secure a position occupied by the nose-like protrusion, the nose-like protrusion 18 is provided at a distance from a hinge 19 with a projection 21 which can drop into a recess 20 on the inner side of skirt-like configuration 13 as shown in Fig. 5. It is hereby possible to realize fixing of the position of nose-like protrusion 18, which can also be released relatively easily in order to once again make nose-like protrusion 18 rotatable in the direction of double arrow A in Fig. 3.

The material of nose-like protrusion 18 is also selected such that it is transparent. Visual inspection of a terminal connection to second conductor 5 is thus possible without any disassembly.

After examination of the foregoing many additional and alternative embodiments will occur to the skilled person which all fall within the scope of protection of the present invention, to the extent such embodiments do not differ in letter or spirit from the definition of the invention in the appended claims. It is thus possible that the skirt-like configuration, cap and nose-like protrusion is/are not wholly manufactured from transparent material. Skirt-like configuration 13 is shown in each case as an element with a substantially circular periphery, but other forms are also possible, such as rectangular, square, elliptical and so on. In the shown and above described embodiment the nose-like protrusion is shown in each case as being angular, although rounding of sharper edges is likewise possible. The nose-like protrusion can be provided on the inner side with a type of clamp for gripping the conductor 5. At least parts of a voltage insulator can be arranged in the interior of skirt-like configuration 13, such as the medium voltage insulator shown in the figures. Protective hood 12 is as it were suspended from copper core 4 without supporting on a part of the device, such as a transformer, where the copper core 4 protrudes. Arranged on top of the inverted cap 17 is a protruding flange 22 which provides a gripping point for the purpose of removing from a distance, for instance using a stick, only the inverted cap 17 from the top side of skirt-like configuration 13, and thereby the mounting plate 14 formed integrally therewith, which according to the invention can take place in managed and controlled manner, this in contrast to the protective hoods of the prior art. Alternative embodiments of hinges or pivot points for pivoting or tilting of the nose-like protrusion 18 will be evident and lie within the scope of protection of the invention, and an indication or warning of high voltage is arranged on skirt-like configuration 13 and/or nose-like protrusion 18, although it can also be arranged on the inverted cap 17.

## Claims

1. A protective hood for protecting an electrical coupling (7) between two conductors (4, 5) which substantially enclose an angle and extend at this angle to the coupling (7) and wherein at least one of the conductors (4) extends at the enclosed angle beyond the coupling (7), comprising:
- a mounting plate (14) accommodating at least the conductor (4) protruding beyond the coupling (7); and
- a skirt-like configuration (13) covering at least the coupling (7) and a part of the length of the conductors (4, 5) up to the coupling (7),
**characterized in that** the mounting plate (14) and the skirt-like configuration (13) form an integrated unit which accommodates the conductor (4) protruding beyond the coupling (7) at a location on conductor (4) along the length thereof opposite the enclosed angle relative to the coupling (7).

2. The protective hood as claimed in claim 1, further comprising a cap (17) which can be placed on the mounting plate (14).

3. The protective hood as claimed in claim 2, wherein there is arranged on the mounting plate (14) a cylindrical ring (16), on and around which the cap (17) fits closely.

4. The protective hood as claimed in claim 2 or 3, wherein the cap (17) comprises a gripping point (22) for controlled removal from at least the mounting plate (14).

5. The protective hood as claimed in at least one of the foregoing claims, wherein in placed position the cap (17) encloses in conjunction with the mounting plate (14) a free end, protruding through the mounting plate (14), of the conductor (4) extending beyond the coupling (7).

6. The protective hood as claimed in at least one of the foregoing claims, wherein at least a part of the skirt-like configuration (13) is manufactured from transparent material.

7. The protective hood as claimed in at least claim 2, wherein at least a part of the cap (17) is manufactured from transparent material.

8. The protective hood as claimed in at least one of the foregoing claims, wherein the skirt-like configuration (13) comprises on at least one side a nose-like protrusion (18) with a shape substantially corresponding to the angle between the conductors (4, 5).

9. The protective hood as claimed in claim 8, wherein the nose-like protrusion (18) is arranged at least one of pivotally and tiltably on the skirt-like configuration (13) for the purpose of adjusting the position of the nose-like protrusion in accordance with the angle between the conductors (4, 5).

10. The protective hood as claimed in claim 9, wherein the nose-like protrusion (18) and the skirt-like configuration (13) are connected by means of at least one hinge (19).

11. The protective hood as claimed in claim 9 or 10, wherein at least one releasable locking (20, 21) is arranged between the nose-like protrusion (18) and the skirt-like configuration (13) for positional adjustment of the nose-like protrusion (18) relative to the skirt-like configuration (13).

12. The protective hood as claimed in at least one of the foregoing claims 8-11, wherein at least a part of the nose-like protrusion (18) is manufactured from transparent material.
